# FASCICULE DE BREVET EUROPEEN

(11) **EP 1 379 858 B1**
(45) Date de publication et mention de la délivrance du brevet: **14.06.2006**
(21) Numéro de dépôt: 02727652.6
(22) Date de dépôt: 09.04.2002
(51) Int. Cl.: G01N 23/09

(54) **MESURE DE LA TENEUR EN EAU DES BOITES D'OXYDE DE PLUTONIUM**
BESTIMMUNG DES WASSERGEHALTES DER PLUTONIUMOXIDBEHÄLTER
MEASURING THE MOISTURE CONTENT OF PLUTONIUM OXIDE CANISTERS

(30) Priorité: 11.04.2001 FR 0104979
(43) Date de publication de la demande: 14.01.2004
(73) Titulaire: COMMISSARIAT A L'ENERGIE ATOMIQUE, 75752 Paris Cédex 15 (FR); COMPAGNIE GENERALE DES MATIERES NUCLEAIRES, 78140 Velizy Villacoublay (FR)
(72) Inventeur: CAPDEVILA, Jean-Marc, F-75015 Paris (FR); BROMET, Laurent, F-92500 Rueil Malmaison (FR)
(74) Mandataire: Poulin, Gérard
(86) Numéro de dépôt international: PCT/FR2002/001230
(87) Numéro de publication internationale: WO 2002/084269

(56) Documents cités:
- US-A- 3 955 087
- HOLSLIN D ET AL: "A moisture probe using neutron moderation for PuO/sub 2/ canister inspection" 1998 IEEE NUCLEAR SCIENCE SYMPOSIUM CONFERENCE RECORD. 1998 IEEE NUCLEAR SCIENCE SYMPOSIUM AND MEDICAL IMAGING CONFERENCE (CAT. NO.98CH36255), 1998 IEEE NUCLEAR SCIENCE SYMPOSIUM CONFERENCE RECORD, TORONTO, ONT., CANADA, 8-14 NOV. 1998, pages 1014-1017 vol.2, XP002188377 1998, Piscataway, NJ, USA, IEEE, USA ISBN: 0-7803-5021-9
- PATENT ABSTRACTS OF JAPAN vol. 005, no. 118 (P-073), 30 juillet 1981 (1981-07-30) & JP 56 058647 A (HITACHI LTD), 21 mai 1981 (1981-05-21)
- PATENT ABSTRACTS OF JAPAN vol. 016, no. 019 (P-1300), 17 janvier 1992 (1992-01-17) & JP 03 237385 A (TOSHIBA CORP), 23 octobre 1991 (1991-10-23)

## Description

### DOMAINE TECHNIQUE

La présente invention est relative à la mesure de la teneur en eau des boîtes d'oxyde de plutonium.

### ETAT DE LA TECHNIQUE ANTERIEURE

Il est nécessaire, avant entreposage, de connaître la teneur en eau des boîtes d'oxyde de plutonium.

La méthode classique de mesure d'humidité de l'oxyde de plutonium conditionné en boîte est intrusive et destructive. Elle ne peut donc permettre que la mesure d'échantillons, la mesure ne pouvant être effectuée sur la totalité du produit. En outre, le délai d'obtention des résultats est assez long (de l'ordre de plusieurs jours). Autre inconvénient, les mesures doivent être réalisées dans un laboratoire spécialisé.

Un procédé de mesure de la teneur en eau d'une quantité de PuO₂ en poudre est divulgué dans le document « A Moisture Probe Using Neutron Moderation for PuO₂ Canister Inspection » de D. HOLSLIN et al., 1998 IEEE Nuclear Science Symposium Conference Record. 1998 IEEE Nuclear Science Symposium and Medical Imaging Conference (Cat. No. 98CH36255), 1998 IEEE Nuclear Science Symposium Conference Record, Toronto, Ont., Canada, 8-14 nov. 1998, pages 1014-1017, Vol. 2, XP002188377, USA ISBN: 0-7803-5021-9. Ce procédé consiste à détecter des neutrons thermiques émis par une source radioisotopique et ralentis par ladite quantité de PuO₂, et à en déduire la teneur en eau d'après une relation d'étalonnage obtenue à partir de la teneur en eau connue d'une quantité de PuO₂ en poudre.

### EXPOSE DE L'INVENTION

La présente invention a été élaborée afin de fournir une méthode de mesure non intrusive, non destructive et utilisable sur le site d'exploitation des boîtes d'oxyde de plutonium.

Le principe proposé pour la mesure repose sur une détection neutronique passive des neutrons spontanément émis par la poudre d'oxyde de plutonium conditionnée en boîte. Les neutrons sont ralentis par lès atomes d'hydrogène et notamment par les atomes d'hydrogène de l'eau. Le dosage de l'humidité de la poudre d'oxyde de plutonium peut donc s'effectuer en évaluant le ralentissement des neutrons émis par les noyaux d'hydrogène des molécules d'eau contenues dans la poudre d'oxyde de plutonium. Le pourcentage des neutrons de basse énergie présents dans le spectre d'émission neutronique de la poudre donne le taux d'humidité présent si on considère que tous les atomes d'hydrogène proviennent de l'eau.

Ce principe de mesure permet de concevoir un dispositif de mesure permettant de déceler un taux d'humidité de la poudre d'oxyde de plutonium supérieur à 0,3% en masse pour une durée de mesure de l'ordre de 15 minutes. La vérification du franchissement du seuil de 0,3% peut être réalisée par comparaison des enregistrements à un spectre de référence effectué sur un échantillon à 0% d'humidité (ou spectre sec).

La prise en compte du bruit de fond neutronique ambiant et son traitement peuvent être effectués par un logiciel de traitement des données réalisant une soustraction de spectre à partir d'un comptage global externe de neutrons effectué par une seconde chaîne de mesure.

L'invention a donc pour objet un procédé de mesure de la teneur en eau d'une quantité de PuO₂ en poudre, consistant à détecter le taux de neutrons thermiques émis par la quantité de PuO₂ en poudre et à en déduire sa teneur en eau d'après une relation établie entre le taux de neutrons thermiques émis par une quantité de PuO₂ en poudre et la teneur en eau connue de cette quantité de PuO₂ en poudre.

Avantageusement, le procédé comprend les étapes suivantes :
- mise en place de la quantité de PuO₂ en poudre dont on veut mesurer la teneur en eau dans une cellule pourvue de moyens de blindage contre les neutrons thermiques extérieurs à la cellule, la cellule comprenant également des moyens de comptage de neutrons à l'intérieur de la cellule,
- la mesure du spectre en énergie des neutrons comptés par les moyens de comptage de neutrons à l'intérieur de la cellule pendant une durée déterminée,
- la mesure des neutrons ambiants, comptés par des moyens de comptage de neutrons placés à l'extérieur de la cellule, simultanément au comptage effectué par les moyens de comptage de neutrons à l'intérieur de la cellule,
- la détermination de la teneur en eau de la quantité de PuO₂ en poudre en comparant le taux de neutrons thermiques émis par la quantité de PuO₂ en poudre, résultant de la différence entre la mesure du spectre en énergie des neutrons comptés par les moyens de comptage de neutrons à l'intérieur de la cellule et une fonction de la mesure des neutrons ambiants, à ladite relation établie entre le taux de neutrons thermiques émis par une quantité de PuO₂ en poudre et la teneur en eau connue de cette quantité de PuO₂ en poudre.

Cette relation entre le taux de neutrons thermiques émis par une quantité de PuO₂ en poudre et la teneur en eau connue de cette quantité de PuO₂ en poudre peut être établie à partir de l'évaluation de l'accroissement de comptage apporté par la présence d'humidité selon un taux connu et à partir de l'évaluation du taux d'humidité réalisée par des mesures effectuées sur une quantité de PuO₂ en poudre de référence à taux d'humidité connu.

L'évaluation de l'accroissement de comptage apporté par la présence d'humidité peut être effectuée par interposition de films plastiques entre une quantité de PuO₂ de référence et des moyens de comptage de neutrons.

L'invention a aussi pour objet un dispositif de mesure de la teneur en eau d'une quantité de PuO₂ en poudre, comprenant :
- une cellule pourvue de moyens de blindage contre les neutrons thermiques extérieurs à la cellule, de moyens de réception de la quantité de PuO₂ en poudre et de moyens de comptage de neutrons à l'intérieur de la cellule,
- des moyens de comptage de neutrons ambiants placés à l'extérieur de la cellule,
- des moyens de mesure du spectre en énergie des neutrons comptés par les moyens de comptage de neutrons à l'intérieur de la cellule pendant une durée déterminée,
- des moyens de traitement informatique permettant de déterminer la teneur en eau de la quantité de PuO₂ en poudre par comparaison du taux de neutrons thermiques émis par la quantité de PuO₂ en poudre, résultant de la différence entre la mesure du spectre en énergie des neutrons comptés par les moyens de comptage de neutrons à l'intérieur de la cellule et une fonction de la mesure des neutrons ambiants, à une relation établie entre le taux de neutrons thermiques émis par une quantité de PuO₂ en poudre et la teneur en eau connue de cette quantité de PuO₂ en poudre.

De préférence, les moyens de réception de la quantité de PuO₂ en poudre sont des moyens permettant la mise en place d'une boîte de PuO₂.

De préférence aussi, la cellule comprend des moyens de refroidissement des moyens de comptage de neutrons situés à l'intérieur de la cellule. Les moyens de refroidissement peuvent comprendre deux fourreaux concentriques constitués par un fourreau interne et un fourreau externe, le fourreau interne comprenant des moyens de réception de la boite de PuO₂, la cellule comprenant des moyens d'introduction et des moyens d'évacuation d'un gaz de refroidissement disposés pour permettre la circulation du gaz de refroidissement entre les deux fourreaux et entre le fourreau interne et la boîte de PuO₂.

Les moyens de comptage de neutrons à l'intérieur de la cellule peuvent être constitués d'au moins un compteur à ³He. Il en va de même pour les moyens de comptage de neutrons à l'intérieur de la cellule.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est un schéma de principe, en coupe longitudinale, d'une cellule de mesure utilisée pour mettre en oeuvre la présente invention,
- la figure 2 est un schéma synoptique du dispositif de mesure de la teneur en eau d'une quantité de PuO₂ en poudre selon la présente invention,
- la figure 3 est un diagramme montrant l'évolution de l'accroissement du comptage de neutrons en fonction du taux d'humidité d'une quantité de PuO₂ en poudre,
- la figure 4 est un diagramme représentant les spectres en énergie des neutrons émis par deux quantités de PuO₂ en poudre à taux d'humidité différents.

### DESCRIPTION DETAILLEE DE MODES DE REALISATION DE L'INVENTION

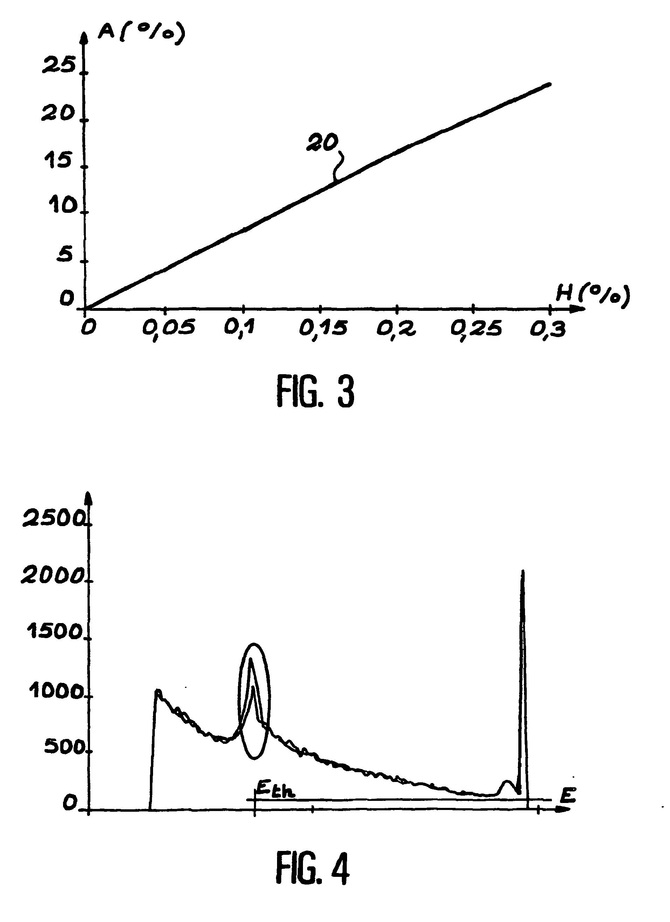

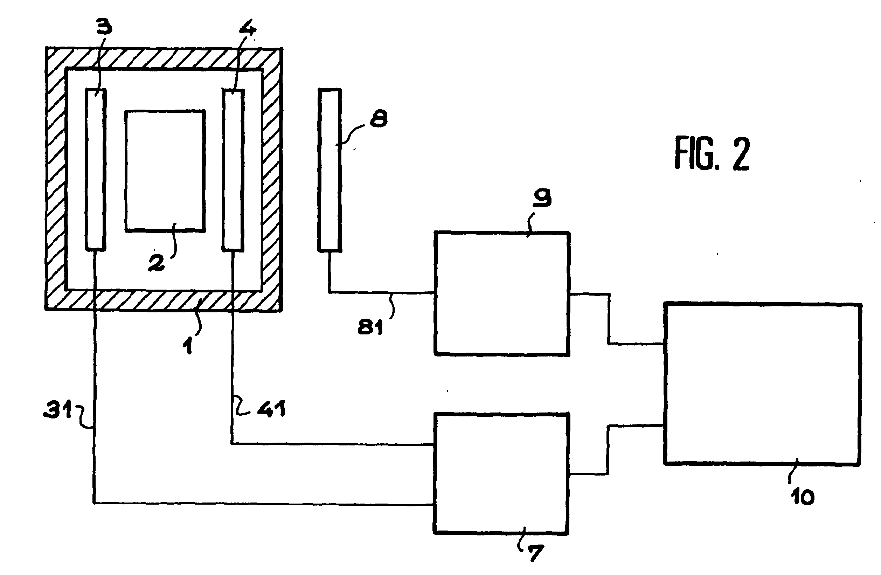

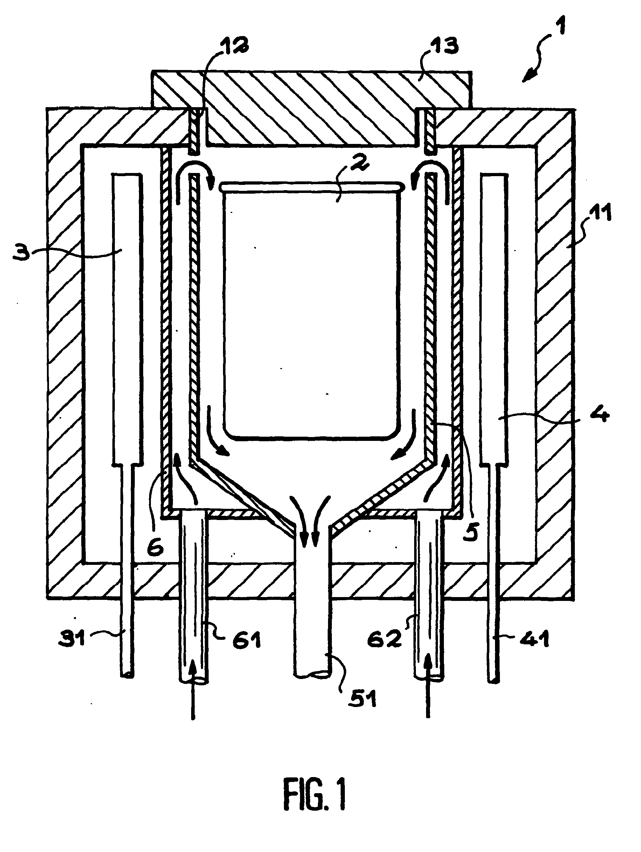

La figure 1 représente, de manière schématique et en coupe longitudinale, une cellule de mesure 1 utilisée pour la mise en oeuvre de la présente invention.

La cellule 1 est dimensionnée pour recevoir une boîte cylindrique 2 de PuO₂ en poudre ainsi que des compteurs de neutrons 3 et 4. La cellule 1 est par exemple de forme parallélépipédique. Elle comprend une paroi 11 pourvue d'une ouverture 12 permettant l'introduction et le retrait de la boîte 2. L'ouverture 12 est obturée par un bouchon 13.

La cellule 1 permet d'isoler les compteurs de neutrons 3 et 4 de l'influence des neutrons thermiques extérieurs à la cellule. L'objectif est de limiter au maximum le bruit de fond neutronique et d'éviter au maximum de fausser l'allure du spectre réel issu du PuO₂ en poudre. La cellule 1 possède des dimensions compatibles avec la boîte de PuO₂ et les compteurs de neutrons 3 et 4. De manière typique, la cellule peut être un parallélépipède de 35 cm x 20 cm x 20 cm.

La cellule 1 peut être avantageusement constituée de deux couches de matériaux absorbeurs de neutrons : une couche inerte de cadmium pour arrêter les neutrons thermiques extérieurs et une couverture de B₄C pour éliminer les neutrons épicadmiques. Pour une meilleure efficacité, le carbure de bore utilisé doit être réalisé avec du bore enrichi à 96% en ¹⁰B. Les épaisseurs recommandées sont de 2 mm pour le cadmium et de 9 mm pour le carbure de bore. Le B₄C utilisé ne doit pas contenir plus de 5% de liant ou d'inclusions. En particulier, l'utilisation de mousses (contenant seulement 50% de B₄C) est à proscrire puisqu'elles contiennent une quantité importante d'hydrogène, ce qui a pour effet de renforcer de façon considérable le bruit de fond.

Pour limiter la montée en température des compteurs 3 et 4 lors de la présence d'une boîte de PuO₂ 2 et tout au long d'un cycle de mesures, il peut être nécessaire de prévoir un système de refroidissement à l'intérieur de la cellule 1. En effet, les conditions thermiques garantissant le bon fonctionnement de la chaîne de mesures sont les suivantes :
- variation de température des compteurs inférieure à 2 ou 3°C pendant une mesure, soit environ 15 minutes ;
- gradient de température le long des compteurs inférieur à 2 ou 3°C ;
- variation de température lors d'un cycle de mesure de plusieurs boîtes consécutives inférieure à 10°C.

La figure 1 montre un système de refroidissement constitué de deux fourreaux cylindriques : un fourreau interne 5 et un fourreau externe 6 concentriques à l'emplacement de la boîte 2. Le fourreau externe 6 est solidaire de la partie supérieure de la cellule tandis que le fourreau interne 5 est solidaire de la partie inférieure de la cellule. La partie inférieure du fourreau externe 6 communique avec des conduits 61 et 62 d'amenée d'air de refroidissement. L'air de refroidissement circule entre le fourreau externe 6 et le fourreau interne 5, passe ensuite entre le fourreau interne 5 et la boîte 2 pour être évacué par le conduit 51 d'évacuation d'air de refroidissement.

Les compteurs de neutrons 3 et 4 sont avantageusement des compteurs à ³He, disposés à 2 cm de la boîte de PuO₂ et à 5 cm de la paroi 11 de la cellule 1. Ils transmettent vers l'extérieur, par les câbles de connexion 31 et 41 des signaux électriques représentatifs des neutrons détectés.

Le fourreau interne 5 possède des éléments non représentés permettant le support et le centrage de la boîte de PuO₂ 2.

La figure 2 est un schéma synoptique de mesure de la teneur en eau d'une quantité de PuO₂ en poudre selon l'invention. Sur cette figure, la cellule 1, la boîte 2 de PuO₂ en poudre, les compteurs de neutrons 3 et 4 et leurs câbles de connexion 31 et 41 sont sommairement représentés.

Le dispositif de mesure met en oeuvre une chaîne d'acquisition neutronique, une chaîne d'acquisition de bruit de fond et une unité de pilotage de traitement de données.

La chaîne d'acquisition neutronique comprend les deux compteurs de neutrons 3 et 4 et regroupés dans le module 7 comprenant les circuits électroniques ou de traitement associés : préamplificateurs, alimentations basse tension et haute tension, sommateur d'impulsions, carte d'analyse biparamétrique (qui fournit pour chaque impulsion entrante le couple amplitude/temps de montée) et codeurs.

Le dispositif comprend aussi une chaîne d'acquisition de bruit de fond. Dans le cas où la mesure est effectuée dans un endroit exposé aux neutrons, le bruit de fond est un paramètre important, qu'il faut absolument contrôler et traiter sous peine de voir la qualité et la fiabilité des résultats se dégrader fortement. Habituellement, la meilleure façon de se soustraire à l'effet du bruit de fond est de l'enregistrer avant de faire la mesure (pour obtenir le bruit de fond sans signal utile), de faire la mesure (pour obtenir le bruit de fond et le signal utile) puis de faire la soustraction des deux mesures. Cependant, cette méthode est à exclure pour les endroits où les boîtes de PuO₂ sont continuellement en mouvement. Dans ce cas, les bruits de fond avant et après introduction de la boîte à mesurer peuvent être complètement différents. Le bruit de fond doit donc être enregistré en permanence, même pendant la mesure de la boîte dans la cellule.

Pour ce faire, on peut utiliser une chaîne d'acquisition de bruit de fond à partir d'un compteur de neutrons 8 identique à ceux utilisés dans la cellule 1 et disposé à proximité de la cellule. Le compteur 8 fournit un signal représentatif des neutrons détectés et véhiculé par le câble de connexion 81 à des circuits électroniques ou de traitement associés regroupés dans le module 9 et comprenant un préamplificateur, un amplificateur de mise en forme, une carte d'acquisition/échelle de comptage et les alimentations basse tension et haute tension nécessaires.

Les modules 7 et 9 délivrent en sortie des informations qui sont adressées à une unité de pilotage et de traitement des données 10. L'unité 10 comprend un programme développé pour un ordinateur de type PC et permettant de réaliser les opérations suivantes :
- réinitialisation ou réglage de tous les paramètres,
- acquisition de spectre et calibration de la mesure,
- acquisition de spectre, traitement du bruit de fond et calcul du taux d'humidité,
- contrôle de bon fonctionnement du dispositif (cyclique entre chaque mesure).

Avant de commencer à utiliser ce dispositif de mesure selon l'invention, il est nécessaire d'étalonner ou de calibrer la mesure. Cette opération s'effectue en deux phases. Une première phase consiste à évaluer l'accroissement de comptage apporté par la présence d'humidité. Une deuxième phase consiste à évaluer le taux d'humidité à partir des mesures effectuées et d'une boîte de PuO₂ de référence à taux d'humidité connu.

La première phase peut être réalisée à l'aide de films plastiques (PVC ou polyuréthane) et d'une boîte de PuO₂ à faible taux d'humidité (inférieur à 0,3%) en traçant une courbe du type représenté à la figure 3. La courbe 20 du diagramme de la figure 3 représente l'accroissement de comptage A en % en fonction du taux d'humidité massique H en %.

La deuxième phase peut être exécutée de deux façons possibles. Selon une première façon, on dispose de deux boîtes de taux d'humidité parfaitement connus couvrant la totalité de la gamme de mesures visée (idéalement de 0 à 0,3%). On réalise alors la mesure de ces deux boîtes pour obtenir deux points de référence et la correspondance entre le taux d'humidité et l'accroissement du comptage.

Selon une deuxième façon, on utilise une boîte de PuO₂ à taux d'humidité mal connu mais presque sèche et un jeu de films en PVC ou en polyuréthane d'épaisseur variable, de façon à envelopper la boîte pour simuler des taux d'humidité variés. On établit ainsi la correspondance entre accroissement du taux d'humidité et accroissement du comptage. Il suffit ensuite d'avoir un seul point de référence (par exemple l'humidité moyenne sur un lot) pour l'évaluation des mesures.

Le diagramme de la figure 4 représente les spectres en énergie des neutrons émis par deux quantités de PuO₂ en poudre. L'axe des ordonnées représente, en unités arbitraires, le comptage des neutrons. L'axe des abscisses rapporté représente l'énergie E déposée par les neutrons sur les compteurs. L'abscisse Eₜₕ représente l'énergie moyenne la plus probable déposée par les neutrons thermiques : 764 keV.

Deux spectres sont représentés sur le diagramme de la figure 4. La zone encerclée comporte deux pics. La courbe possédant le pic le plus bas correspond à une poudre de PuO₂ sans trace d'humidité. La courbe possédant le pic le plus haut correspond à une poudre de PuO₂ ayant 0,6% d'humidité. Le taux d'humidité s'obtient en normalisant la surface du pic pour le canal en énergie correspondant aux neutrons thermiques.

Le dispositif selon l'invention permet de détecter en une mesure d'une durée de 15 minutes, le franchissement du seuil de 0,3% d'humidité massique.

Des améliorations peuvent être apportées pour obtenir des mesures plus précises. A titre d'exemple, le nombre de compteurs à l'intérieur de la cellule peut être augmenté afin d'accroître le taux de comptage.

## Revendications

1. Procédé de mesure de la teneur en eau d'une quantité de PuO₂ en poudre, consistant à détecter le taux de neutrons thermiques émis par la quantité de PuO₂ en poudre et à en déduire sa teneur en eau d'après une relation établie entre le taux de neutrons thermiques émis par une quantité de PuO₂ en poudre et la teneur en eau connue de cette quantité de PuO₂ en poudre.

2. Procédé selon la revendication 1, **caractérisé en ce qu'**il comprend les étapes suivantes :
- mise en place de la quantité de PuO₂ en poudre dont on veut mesurer la teneur en eau dans une cellule (1) pourvue de moyens de blindage contre les neutrons thermiques extérieurs à la cellule, la cellule (1) comprenant également des moyens de comptage de neutrons (3, 4) à l'intérieur de la cellule,
- la mesure du spectre en énergie des neutrons comptés par les moyens de comptage de neutrons (3, 4) à l'intérieur de la cellule (1) pendant une durée déterminée.
- la mesure des neutrons ambiants, comptés par des moyens de comptage de neutrons (8) placés à l'extérieur de la cellule, simultanément au comptage effectué par les moyens de comptage de neutrons (3, 4) à l'intérieur de la cellule (1),
- la détermination de la teneur en eau de la quantité de PuO₂ en poudre en comparant le taux de neutrons thermiques émis par la quantité de PuO₂ en poudre, résultant de la différence entre la mesure du spectre en énergie des neutrons comptés par les moyens de comptage de neutrons (3, 4) à l'intérieur de la cellule (1) et une fonction de la mesure des neutrons ambiants, à ladite relation établie entre le taux de neutrons thermiques émis par une quantité de PuO₂ en poudre et la teneur en eau connue de cette quantité de PuO₂ en poudre.

3. Procédé selon la revendication 2, **caractérisé en ce que** ladite relation entre le taux de neutrons thermiques émis par une quantité de PuO₂ en poudre et la teneur en eau connue de cette quantité de PuO₂ en poudre est établie à partir de l'évaluation de l'accroissement de comptage apporté par la présence d'humidité selon un taux connu et à partir de l'évaluation du taux d'humidité réalisée par des mesures effectuées sur une quantité de PuO₂ en poudre de référence à taux d'humidité connu.

4. Procédé selon la revendication 3, **caractérisé en ce que** l'évaluation de l'accroissement de comptage apporté par la présence d'humidité est effectuée par interposition de films plastiques entre une quantité de PuO₂ de référence et des moyens de comptage de neutrons.

5. Procédé selon l'une quelconque des revendications 1 à 4, **caractérisé en ce que** la quantité de PuO₂ dont on veut mesurer la teneur en eau est disposée dans une boîte (2).

6. Dispositif de mesure de la teneur en eau d'une quantité de PuO₂ en poudre, comprenant :
- une cellule (1) pourvue de moyens de blindage contre les neutrons thermiques extérieurs à la cellule, de moyens de réception de la quantité de PuO₂ en poudre et de moyens de comptage de neutrons (3, 4) à l'intérieur de la cellule,
- des moyens de comptage de neutrons ambiants (8) placés à l'extérieur de la cellule,
- des moyens de mesure du spectre en énergie des neutrons comptés par les moyens de comptage de neutrons (3, 4) à l'intérieur de la cellule pendant une durée déterminée,
- des moyens de traitement informatique (10) permettant de déterminer la teneur en: eau de la quantité de PuO₂ en poudre par comparaison :du taux de neutrons thermiques émis par la quantité de PuO₂ en poudre, résultant de la différence entre la mesure du spectre en énergie des neutrons comptés par les moyens de comptage de neutrons (3, 4) à l'intérieur de la cellule (1) et une fonction de la mesure des neutrons ambiants, à une relation établie entre le taux de neutrons thermiques émis par une quantité de PuO₂ en poudre et la teneur en eau connue de cette quantité de PuO₂ en poudre.

7. Dispositif de mesure selon la revendication 6, **caractérisé en ce que** les moyens de réception de la quantité de PuO₂ en poudre sont des moyens permettant la mise en place d'une boîte de PuO₂ (2).

8. Dispositif de mesure selon la revendication 6, **caractérisé en ce que** la cellule (1) comprend des moyens de refroidissement des moyens de comptage de neutrons (3, 4) situés à l'intérieur de la cellule.

9. Dispositif de mesure selon les revendications 7 et 8 prises ensemble, **caractérisé en ce que** les moyens de refroidissement comprennent deux fourreaux concentriques constitués par un fourreau interne (5) et un fourreau externe (6), le fourreau interne (5) comprenant des moyens de réception de la boite de PuO₂ (2), la cellule comprenant des moyens d'introduction (61, 62) et des moyens d'évacuation (51) d'un gaz de refroidissement disposés pour permettre la circulation du gaz de refroidissement entre les deux fourreaux (5, 6) et entre le fourreau interne (5) et la boîte de PuO₂ (2).

10. Dispositif de mesure selon l'une quelconque des revendications 6 à 9, **caractérisé en ce que** les moyens de comptage de neutrons (3, 4) à l'intérieur de la cellule (1) sont constitués d'au moins un compteur à ³He.

11. Dispositif de mesure selon l'une quelconque des revendications 6 à 10, **caractérisé en ce que** les moyens de comptage de neutrons (8) à l'extérieur de la cellule sont constitués d'au moins un compteur à ³He.

## Claims

1. Process for measuring the moisture content in a quantity of PuO₂ powder, consisting of detecting the content of thermal neutrons emitted by the quantity of PuO₂ powder and then deducing its moisture content from this value assuming a relation determined between the proportion of thermal neutrons emitted by a quantity of PuO₂ powder and the known moisture content in this quantity of PuO₂ powder.

2. Process according to claim 1, **characterized in that** it includes the following steps:
- place the quantity of PuO₂ powder for which the moisture content is to be measured in a cell (1) provided with means of shielding against thermal neutrons external to the cell, the cell (1) also comprising neutron counting means (3, 4) inside the cell,
- measure the energy spectrum of neutrons counted by neutron counting means (3, 4) inside the cell (1) for a given duration,
- measure ambient neutrons, counted by neutron counting means (8) placed outside the cell, at the same time as the count is made by neutron counting means (3, 4) inside the cell,
- determine the moisture content in the quantity of PuO₂ powder by comparing the proportion of thermal neutrons emitted by the quantity of PuO₂ powder, resulting from the difference between the measurement of the energy spectrum of neutrons counted by neutron counting means (3, 4) inside the cell (1) and an ambient neutron measurement function, with said determined relation between the proportion of thermal neutrons emitted by a quantity of PuO₂ powder and the known moisture content of this quantity of PuO₂ powder.

3. Process according to claim 2, **characterized in that** said relation between the proportion of thermal neutrons emitted by a quantity of PuO₂ powder is determined by evaluating the increase in the count due to the presence of a known moisture content and starting from the evaluation of the moisture content made by measurements on a quantity of reference PuO₂ powder with a known moisture content.

4. Process according to claim 3, **characterized in that** the increase in the count due to the presence of moisture may be evaluated by inserting plastic films between a quantity of reference PuO₂ and neutron counting means.

5. Process according to any one of claims 1 to 4, **characterized in that** the quantity of PuO₂ for which the moisture content is to be measured is arranged in a box (2).

6. Device for measuring the moisture content of a quantity of PuO₂ powder, comprising:
- a cell (1) provided with means of shielding against thermal neutrons external to the cell, means of receiving the quantity of PuO₂ powder and means (3, 4) of counting neutrons inside the cell,
- means (8) of counting ambient neutrons placed outside the cell,
- means of measuring the energy spectrum of neutrons counted by neutron counting means (3, 4) inside the cell for a given duration,
- computer processing means (10) to determine the moisture content of the quantity of Pu02 powder by comparison of the proportion of thermal neutrons emitted by the quantity of PuO₂ powder, determined by taking the difference between the measurement of the energy spectrum of neutrons counted by neutron counting means (3, 4) inside the cell (1) and an ambient neutron measurement function, with a relation determined between the proportion of thermal neutrons emitted by a quantity of PuO₂ powder and the known moisture content of this quantity of PuO₂ powder.

7. Measurement device according to claim 6, **characterized in that** the means containing the quantity of PuO₂ powder enable placement of a PuO₂ box (2).

8. Measurement device according to claim 6, **characterized in that** the cell (1) comprises means of cooling the neutron counting means (3, 4) inside the cell.

9. Measurement device according to claims 7 and 8 taken together, **characterized in that** the cooling means include two concentric ducts composed of an inner duct (5) and an outer duct (6), the inner duct (5) comprising means of containing the PuO₂ box (2), the cell comprising means (61, 62) of introducing and means (51) of evacuation of a cooling gas arranged to enable the cooling gas to circulate between the two ducts (5, 6) and between the inner duct (5) and the PuO₂ box (2).

10. Measurement device according to any one of claims 6 to 9, **characterized in that** the means (3, 4) of counting neutrons inside the cell (1) consist of at least one ³He counter.

11. Measurement device according to any one of claims 6 to 10, **characterized in that** means (8) of counting neutrons outside the cell consist of at least one ³He counter.

## Patentansprüche

1. Verfahren zur Bestimmung des Wassergehaltes einer pulverförmigen PuO₂-Menge, das darin besteht, dass man die Anzahl der thermischen Neutronen bestimmt, die von der pulverförmigen PuO₂-Menge emittiert werden, und dass man daraus ihren Wassergehalt ableitet anhand einer Beziehung, die aufgestellt worden ist zwischen der Anzahl der von einer pulverförmigen PuO₂-Menge emittierten thermischen Neutronen und dem bekannten Wassergehalt dieser pulverförmigen PuO₂-Menge.

2. Verfahren nach Anspruch 1, **dadurch gekennzeichnet, dass** es die folgenden Stufen umfasst:
- das Einführen der pulverförmigen PuO₂-Menge, deren Wassergehalt bestimmt werden soll, in eine Zelle (1), die mit einer Abschirmungseinrichtung gegen die thermischen Neutronen außerhalb der Zelle ausgestattet ist, wobei die Zelle (1) außerdem Einrichtungen (3, 4) zum Zählen von Neutronen im Innern der Zelle aufweist,
- die Messung des Energiespektrums der durch die Einrichtungen (3, 4) zum Zählen von Neutronen im Innern der Zelle (1) gezählten Neutronen während einer festgelegten Zeitdauer,
- die Bestimmung der Neutronen in der Atmosphäre, die mit Neutronenzähleinrichtungen (8), die außerhalb der Zellen angeordnet sind, gezählt worden sind, gleichzeitig mit der Zählung, die mit den Neutronenzähleinrichtungen (3, 4) im Innern der Zelle (1) durchgeführt worden ist,
- die Bestimmung des Wassergehaltes der pulverförmigen PuO₂-Menge durch Vergleich der Anzahl der von der pulverförmigen PuO₂-Menge emittierten thermischen Neutronen, die resultiert aus der Differenz zwischen der Messung des Energiespektrums der von den Neutronenzähleinrichtungen (3, 4) im Innern der Zelle (1) gezählten Neutronen und der Messung der Neutronen in der Atmosphäre, mit der Beziehung, die zwischen der Anzahl der von einer pulverförmigen PuO₂-Menge emittierten thermischen Neutronen und dem bekannten Wassergehalt dieser pulverförmigen PuO₂-Menge aufgestellt wurde.

3. Verfahren nach Anspruch 2, **dadurch gekennzeichnet, dass** die genannte Beziehung zwischen der Anzahl der von einer pulverförmigen PuO₂₋Menge emittierten thermischen Neutronen und dem bekannten Wassergehalt dieser pulverförmigen PuO₂-Menge aufgestellt wird, ausgehend von der Bewertung der Zunahme der Anzahl der Neutronen, die auftritt als Folge der Anwesenheit eines bekannten Feuchtigkeitsgehaltes, und ausgehend von der Bewertung des Feuchtigkeitsgehaltes, der bestimmt worden ist durch Messungen, die bei einer pulverförmigen Referenz-PuO₂-Menge mit bekanntem Feuchtigkeitsgehalt durchgeführt worden sind.

4. Verfahren nach Anspruch 3, **dadurch gekennzeichnet, dass** die Bewertung der Zunahme der Anzahl der Neutronen, die durch die Anwesenheit von Feuchtigkeit herbeigeführt wird, vorgenommen wird, indem man Kunststofffilme zwischen einer Referenz-PuO₂-Menge und Neutronzähleinrichtungen anordnet.

5. Verfahren nach einem der Ansprüche 1 bis 4, **dadurch gekennzeichnet, dass** die PuO₂-Menge, deren Wassergehalt bestimmt werden soll, in einem Behälter (2) angeordnet wird.

6. Vorrichtung zur Bestimmung des Wassergehaltes einer pulverförmigen PuO₂-Menge, die umfasst:
- eine Zelle (1), die mit Einrichtungen zur Abschirmung gegen die thermischen Neutronen außerhalb der Zelle, mit Einrichtungen zur Aufnahme der pulverförmigen PuO₂-Menge und Neutronen-Zähleinrichtungen (3, 4) im Innern der Zelle ausgestattet ist,
- Einrichtungen (8) zum Zählen der Neutronen in der Atmosphäre, die außerhalb der Zelle angeordnet sind,
- Einrichtungen zur Messung des Energiespektrums der von den Neutronenzähleinrichtungen (3, 4) im Innern der Zelle während einer vorgegebenen Zeitdauer gezählten Neutronen,
- Einrichtungen (10) zur Verarbeitung von Informationen, welche die Bestimmung des Wassergehaltes der pulverförmigen PuO₂-Menge durch Vergleich der Anzahl der von der pulverförmigen PuO₂-Menge emittierten thermischen Neutronen, die resultiert aus der Differenz zwischen der Messung des Energiespektrums der von den Neutronenzähieinrichtungen (3, 4) im Innern der Zelle (1) gezählten Neutronen und der Messung der Neutronen in der Atmosphäre mit einer Beziehung, die aufgestellt worden ist zwischen den von einer pulverförmigen PuO₂-Menge emittierten thermischen Neutronen und dem bekannten Wassergehalt dieser pulverförmigen PuO₂-Menge.

7. Vorrichtung nach Anspruch 6, **dadurch gekennzeichnet, dass** die Einrichtungen zur Aufnahme der pulverförmige PuO₂-Menge solche Einrichtungen sind, die das Einführen eines PuO₂-Behälters (2) erlauben.

8. Vorrichtung nach Anspruch 6, **dadurch gekennzeichnet, dass** die Zelle (1) Einrichtungen zum Kühlen der Neutronenzähleinrichtungen (3, 4), die im Innern der Zelle angeordnet sind, umfasst.

9. Vorrichtung nach den Ansprüchen 7 und 8 zusammengenommen, **dadurch gekennzeichnet, dass** die Kühleinrichtungen umfassen zwei konzentrische Hüllen, die bestehen aus einer inneren Hülle (5) und einer äußeren Hülle (6), wobei die innere Hülle (5) Einrichtungen zur Aufnahme des PuO₂-Behälters (2) aufweist, die Zelle Einrichtungen (61, 62) zur Einleitung und Einrichtungen (51) zum Abziehen eines Kühlgases aufweist, die vorgesehen sind, um die Zirkulation des Kühlgases zwischen den beiden Hüllen (5, 6) und zwischen der inneren Hülle (5) und dem PuO₂-Behälter (2) zu ermöglichen.

10. Vorrichtung nach einem der Ansprüche 6 bis 9, **dadurch gekennzeichnet, dass** die Neutronen-Zähleinrichtungen (3, 4) im Innern der Zelle (1) aus mindestens einem ³He-Zähler bestehen.

11. Vorrichtung nach einem der Ansprüche 6 bis 10, **dadurch gekennzeichnet, dass** die Neutronen-Zähleinrichtungen (8) außerhalb der Zelle aus mindestens einem ³He-Zähler bestehen.
